# EUROPEAN PATENT APPLICATION

(11) **EP 1 519 172 A1**
(43) Date of publication of application: **30.03.2005**
(21) Application number: 04104522.0
(22) Date of filing: 17.09.2004
(51) Int. Cl.: G01K 13/00

(54) **Method for measuring the temperature of the human body by an infrared thermometer and a thermometer for implementing the method**

(30) Priority: 26.09.2003 CH 164203
(71) Applicant: ARTSANA S.p.A., 22070 Grandate, (Como) (IT)
(72) Inventor: Schaerer, Salomon, 8706, Meilen (CH)
(74) Representative: Ripamonti, Enrico, Dr. Ing.

(57) **Abstract**

A method for measuring the temperature of the human body by an infrared thermometer (1), this latter having a temperature sensor (27), said method comprising the following steps: placing said sensor unit (27) on the forehead and moving it therealong, during said movement the forehead temperature being measured; then placing said sensor unit behind the ear in contact with the user to hence measure the body temperature present thereat; displaying the body temperature only subsequent to these measurements, said temperature being a function of the two measurements effected.

A thermometer for implementing the aforedescribed method is also claimed.

## Description

The present invention relates to a method for measuring the temperature of the human body by an infrared thermometer in accordance with the corresponding main claim. The invention also relates to a thermometer for implementing the aforesaid method.

It is well known that the body temperature can be measured in many ways and in various parts of the human body. This measurement can also be achieved by different electronic or "mechanical" means. For example it is known to measure the body temperature by sensing the temperature of the forehead or of the temple region thereof. This measurement can be achieved by a liquid crystal temperature indicator as described in US4302971, or by an infrared temperature indicator as described, for example, in US6292685.

With reference to the aforesaid patents, US4302971 describes the use of a liquid crystal temperature indicator to measure the temperature of the human body. This indicator is preferably positioned, for example, in correspondence with the upper orbital artery to the left and right of the forehead so as to reliably measure its temperature. This measurement is achieved by the change in colour of one or more parts of the indicator corresponding to predetermined temperature values and can take account of the ambient temperature by adding or subtracting a predefined number of degrees depending on whether the ambient temperature is less or greater than a precise numerical value.

This known temperature measurement device and associated method do not however allow precise reliable measurements, as small fractional degree variations cannot be detected by corresponding colour changes of the various parts of the temperature indicator.

US6292685 measures the body temperature by measuring the temperature in correspondence with the temporal artery. This measurement is obtained by scanning the temporal artery region on the forehead with an infrared ray sensor (or simply "infrared sensor"): in this manner the temporal artery is intercepted and the heat emitted by it is "read". By means of which reading and using predefined comparison algorithms, a control unit of the sensor defines the body temperature and displays it on a suitable display. This known solution using an infrared thermometer has the considerable drawback of not ensuring that the temperature of said artery is effectively measured. This is mainly because, particularly in children, the temporal artery is very close to the hair line and often below the hair, so that an effective measurement of its temperature cannot be correctly achieved, or even becomes totally impracticable.

In any event it is often not possible to precisely determine the position of the temporal artery, hence leading to imprecise measurements of the body temperature.

In addition, in measuring the temperature, the known methods do not enable account to be taken of possible localized temperature unbalances related to particular emotive or stressful conditions which can falsify the measurement. Finally, the known methods can give different results even when used to measure the temperature of the same person but on the two sides of the forehead, it being well known that the body temperature measured on these two sides can vary in the same patient.

WO 01/38840 describes a method for measuring the temperature of a body by an infrared thermometer according to which the thermometer is scanned across the forehead of a patient and behind at least one ear; after the two scans, the maximum peak temperature is selected as the detected body temperature. Hence the latter is a function of only one of the two scans, i.e. is a function either of the forehead temperature or of the temperature detected behind the ear.

In the prior art, no comparison of the results of the two scans is made. This beacause the measurement behind the ear is only considered as an alternative of the forehead measurement which gives good results only when the forehead measurement is low due to perspiration. In fact, the prior art considers that the temperature measurement behind the ear per se is not a good choice as the arteries in this body part may be constricted, thus providing an inaccurate measurement of the body (or core) temperature.

Hence, in the prior art, the higher of the two temperature readings should indicate the most accurate core temperature reading.

From WO 01/38840, the skilled man would never consider to combine the temperature measurement results obtained on the forehead and behind the ear in order to obtain a temperature value which can reliably represent the body (or core) temperature. This because the prior art teaches that the temperature measurement obtained behind the ear is an inaccurate measurement.

With regard to known infrared thermometers, these are generally bulky because of the wave guide provided in correspondence with a window when the infrared sensor is positioned. This means that the device is undeniably fragile and that the wave guide can easily break if subjected to impact.

Moreover some devices of the stated type do not allow rapid reversible changeover of the unit of measurement (°C or °F) of the measured temperature.

An object of the present invention is to provide an infrared method and thermometer for measuring the body temperature which overcome the drawbacks of the known methods and devices.

A particular object of the invention is to provide a method for measuring the body temperature in a reliable manner which is not influenced, at least to a substantial and important extent, by stressful or emotive states of the patient measuring said temperature, and is also independent of the actual side of the body on which the measurement is effected.

Another object if to provide a thermometer of compact type which is easily usable and is less subject to soiling, to impact and to breakage than known thermometers.

These and further objects which will be apparent to the expert of the art are attained by a method and device in accordance with the accompanying claims.

According to the invention, the body temperature measurement comprises a first step in which a first measurement on the forehead is obtained and a second step in which a second measurement behind the ear is made, and after having made said measurements, the body temperature is displayed as a function of the two measurements effected. In particular, the above measurements are used to obtain a mean value corresponding to the body temperature.

In other words, both the temperature measurements contribute to give the body temperature which is a function of the two measurements. This procedure comes from the fact that the Applicant ascertained that the arteries on the forehead and behind the ear are both very good means for obtaining a very reliable measurement of the body temperature. In spite of the teaching of WO 01/38840, even the temperature measurement behind the ear is well representative of the body temperature measurement.

Furthermore, if only one measurement is chosen, even that giving the peak temperature, this would lead to an inaccurate body temperature measurement due to the fact that possible localized temperature unbalances can arise on one of the two body parts where the measurement is made. In this case an incorrect temperature would be displayed.

Since the contribution of both measurements (i.e., on the forehead and behind the ear) is used to obtain the final value of the body temperature, the above drawback is overcome and a more accurate body temperature value is displayed.

The present invention will be more apparent from the accompanying drawing, which is provided by way of non-limiting example and in which:

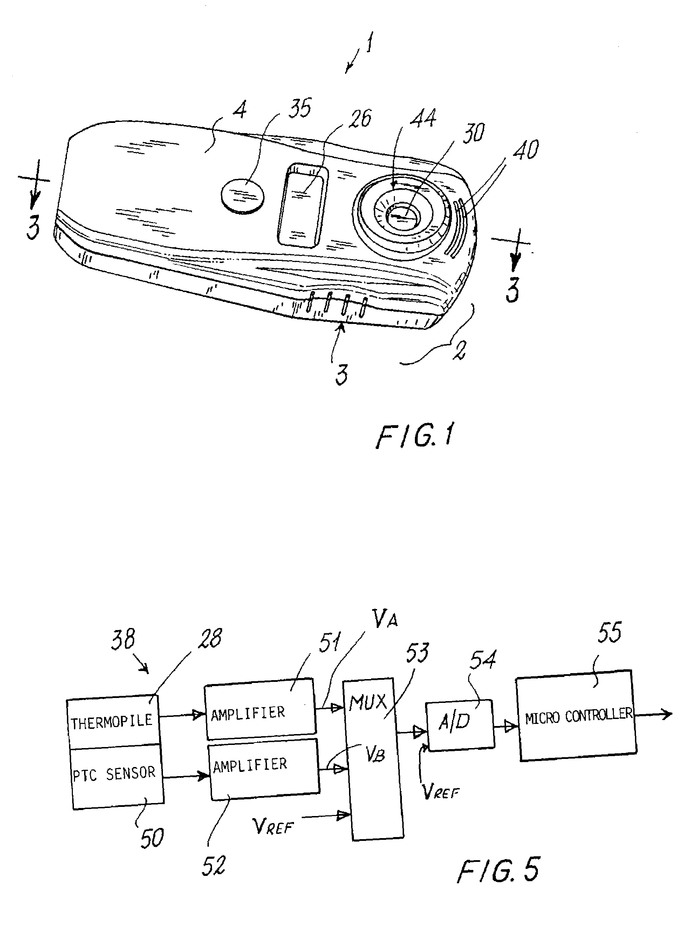

Figure 1 is a perspective view of a thermometer according to the invention;

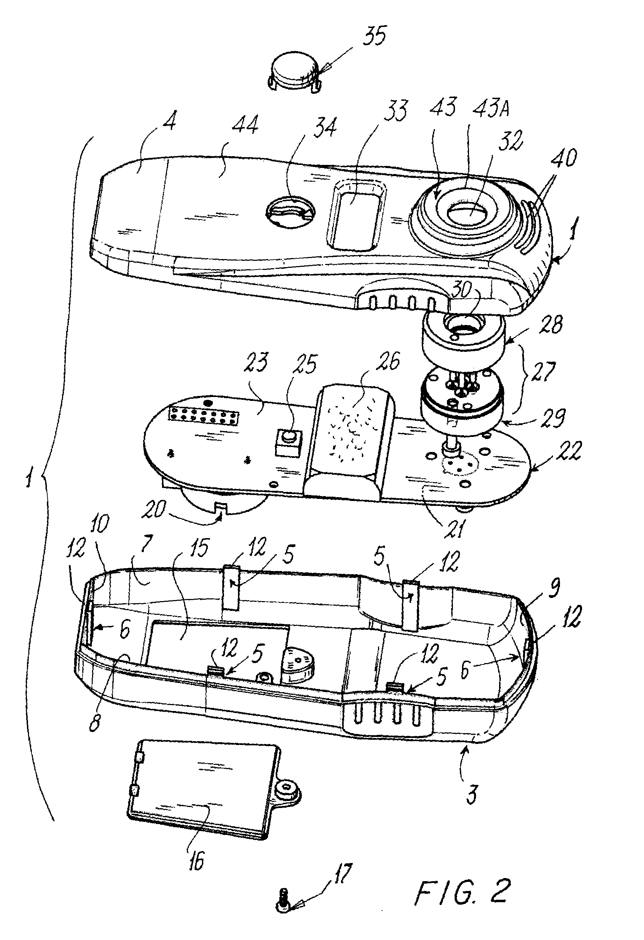

Figure 2 is an exploded view of the thermometer of Figure 1;
Figure 3 is a section on the line 3-3 of Figure 1;
Figure 4 is a view from a side of the thermometer of Figure 1; and
Figure 5 is a block diagram of the thermometer of Figure 1.

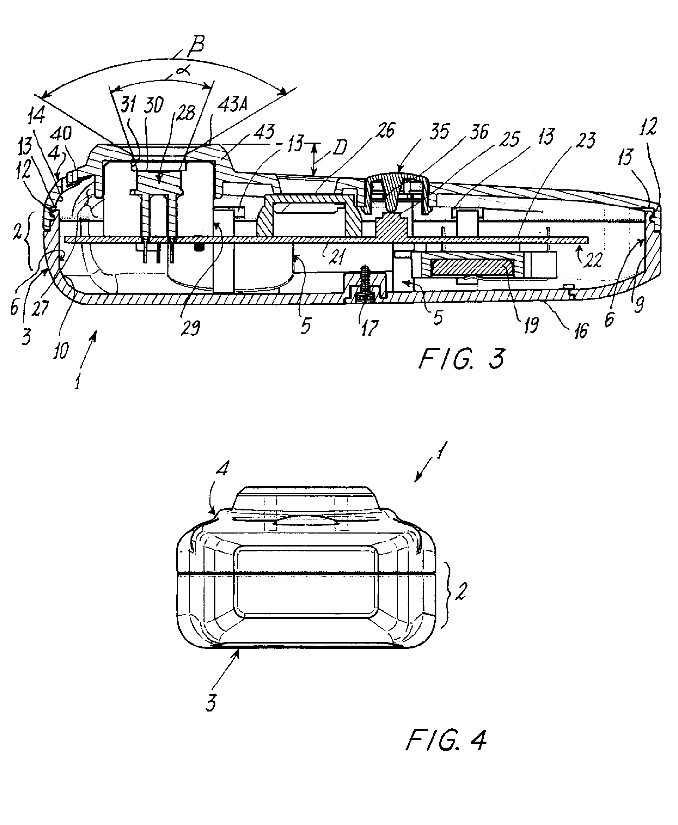

With reference to the said figures, a thermometer according to the invention is indicated overall by 1 and comprises a box casing 2 presenting two parts 3 and 4 to be placed in mutual contact and joined together, for example snap-fitted by elastic teeth 5 and 6 associated with the first part 3 and present, respectively, in correspondence with side walls 7 and 8 and ends 9 and 10 of said part 3 of the casing 2. These teeth 5 and 6 have their ends 12 hook shaped to cooperate with recesses 13 provided in an internal wall 14 of the second part 4 of the casing 2 (see Figure 3), so as to join said parts together.

The first part 3 presents an aperture 15 closable by its own door 16 fixable by screws 17 to said part. The aperture is arranged to provide access to a seat 20 for removable electrical power supplies (for example electric batteries) provided on a first flat face 21 of an intermediate part 22 positioned in the interior of the casing 2 and interposed between the parts 3 and 4. Said part 22 is supported within the casing 2 in any known manner, for example by supports not shown for simplicity.

The intermediate part 22 presents a second flat face 23 on which there are provided a pushbutton 25, a liquid crystal display 26 and an infrared sensor unit 27 comprising a usual thermopile 28 and a dissipator 29. The dissipator contains a thermopile having its sensor part 30 positioned in correspondence with a recess 31 in the dissipator 29 facing a window 32 provided in the second part 4 of the casing 2. A recess is provided between the dissipator 29 and thermopile 28 to create an insulating layer (of air) which prevents any contact between the patient and dissipator modifying the value of the temperature measured by the thermopile or making it unreliable.

The thermopile presents another window 33 in correspondence with the display 26 and a through hole 34 in correspondence with the pushbutton 25 in which a presser element 35 is inserted to cooperate, via a projection 36 thereon, with said pushbutton to activate the thermometer functions. The pushbutton and the other electrically powered parts of the thermometer are all connected to a microprocessor circuit 38 which controls its operation and enables the infrared-measured temperature to be displayed. This circuit is shown in terms of its main components in Figure 5 and is described hereinafter.

Slits 40 are provided in the part 4 for passage of air into the casing 2 to cool the electrical components contained therein.

It should be noted that the useful sensing angle α of the sensor part 30 of the thermopile 28 has a value which is considerably less than the angle β defining the aperture of the window 32, which has flared edges. It lies for example between 25° and 60°, whereas β lies between 80° and 135°. In this manner, the window 32 can be provided within a projection 43 rising slightly from a outer surface 44 of the second part 4 of the casing 2: for example, the distance D (Figure 3) between said surface 44 and the end part of the window 32 is between 0.1 and 0.8 mm. By virtue of this characteristic, the sensor unit 27 of the thermometer is protected (by the projection 43) against possible impact, is reinforced by the fact that this projection 43 only slightly projects from the surface 44 of the second part 4 of the casing 2, and at the same time enables optimal measurement (described hereinafter) of the body temperature of a patient to be achieved by resting the surface part 43A of the projection 43 either on the forehead or behind the ear of the patient. The compact reduced form of the projection 43 dispenses with the usual funnel-shaped configurations of those external parts of known thermometers within which the infrared sensor is positioned. In thermometers of the state of the art, these funnel parts act as a "wave guide" for measuring the heat emitted by the body on which these parts rest during the use of the thermometer, however their presence would prevent easy use of the infrared thermometer for measuring the temperature behind the ear in correspondence with the auricular artery, i.e. in a region in which the blood flow is high and constant as it is directed towards the brain, which is constantly irrigated even in the case of shock or physical stress to which the patient is or has been subjected. For this reason, i.e. the presence of said external funnel parts, known thermometers are not particularly simple to use or even effective in some cases.

By virtue of said configuration, and in particular of the layer of air between the thermopile 28 and the dissipator 29, the reference temperature (with which the measured temperature is compared) is made equal to ambient temperature, to hence achieve an optimum measurement of the body temperature.

Moreover, said configuration enables dirt accumulation on the sensor unit 27 to be prevented, so preventing such dirt making the temperature measurement inaccurate.

The microprocessor unit 38 which controls the operation of the thermometer is shown in Figure 5. It comprises the thermopile 28 and the dissipator 29, which presents a PTC sensor 50 in thermal equilibrium with the environment in which the thermometer is located. The thermopile and the PTC sensor are connected to corresponding amplifiers 51 and 52 connected to a multiplexer 53 the (analog) output of which is converted by an A/D converter 54 which feeds its output to the microprocessor 55 controlling the liquid crystal display 26 (or similar display), not shown in Figure 5. To the circuit 38 there are also connected the pushbutton 25 in known manner and the power supply (battery/batteries), neither of which is shown.

The use of the thermometer will now be described with reference to the method of the invention.

With reference to the aforestated considerations regarding measurement of the body temperature by measuring the body heat behind the ear to achieve reliable and optimal measurement of this temperature in a manner independent of the stressful or emotive state of the patient, according to the invention after activating the circuit 38 (by means of the pushbutton 25), the thermometer is rested via the surface part 43A of the projection 43 on the patient's forehead such that the part 43A is in contact therewith. This projection 43 is then slid along the patient's forehead and preferably along the region above the eye where the orbital artery is present, this being a known seat of constant and substantial blood flow directed to the brain. The measurement of the blood temperature in correspondence with said artery, and that effected behind the ear, are representative of the effective temperature of the patient's body, as is well known in medicine. In other words, by moving said projection 43 the temperature is measured in correspondence with the internal and external frontal or supraorbital arteries, being branches of the internal carotid artery. The supraorbital artery, a branch of the ophthalmic artery, itself a branch of the internal carotid, anastomoses with the internal frontal artery branch of the external carotid: in this manner a temperature indicative of the core temperature or blood temperature at its exit from the heart is measured, this measurement being less influenced by the external environment as it is effected essentially on an internal part of the patient's body.

The projection 43 is moved along the forehead for measurement of the temperature of the orbital artery by the infrared sensor unit 27 by moving this projection for example from the centre of the forehead, along the eyebrow and then to the temple. During this movement the projection is always free to move and is not impeded in its movement by the presence of the hair, as can instead occur when using the known infrared thermometers which measure the body temperature by measuring the blood circulating through the temporal artery. In this respect, in such cases the temporal artery is often below the hair (as is often the case with children) so that these known thermometers do not always allow optimal temperature measurement.

During said movement the unit 27 takes a plurality of readings (for example 10). In particular, according to one embodiment of the method of the invention, said unit operates in the following manner, after waiting for the measured temperature to exceed a predetermined value (close to the average human body temperature of 36°C, for example 31°C) to enable the circuit 38 to measure the effective body temperature independently of ambient temperature (measured by the PTC probe or sensor 50):
a) the 10 highest temperatures measured within a definite time span (for example 1 second) are stored in a buffer store of the microprocessor 55, in order from the highest to the lowest (double measurements are allowed);
b) the mean, for example the weighted mean, of the highest 5 temperatures is calculated;
c) a comparison between the highest measured temperature and the calculated mean temperature is made: if the highest measured temperature exceeds the thus calculated mean by a predetermined value, for example 0.3 degrees, it is discarded and the calculation of the mean value (the above step b)) is repeated with the next 5 highest temperatures until this inequality is respected. This step of the method eliminates any spurious measurements which differ considerably from the mean of the next closest temperatures;
d) any necessary correction of the measured temperature with ambient temperature is made, for example using a quadratic curve;
e) the temperature of the subject's forehead is calculated making corrections dependent on the ambient temperature.

On termination, the microprocessor 55 activates an audio alarm (not shown) indicating termination of the measurement.

The step b) above cited can be substituted by calculating, by means of a histogram of the higher detected temperatures (e.g., five values), the weighted mean.

After the termination of the measurement, without any value being displayed on the display 26, the thermometer is placed behind the head so that the projection 43 rests on that part to the rear of the ear, in proximity to its attachment region. Positioning the projection 43 (and hence the unit 27) behind the ear as indicated is facilitated by the shape of this projection, which enables it to be easily placed as close as possible to the ear. When in this position, the aforesaid steps a-e are repeated. On termination of the temperature measurement, the microprocessor 55 determines the body temperature and activates the display 26 in order to show it. Said body temperature is neither the peak temperature detected by means of the two measurements (on the forehead and behind the ear) nor a simple mean temperature calculation of the detected temperatures on the forehead and behind the ear.

The circuit 38 operates in the following manner, in one embodiment of the invention.

The signal provided by the thermopile 28 is amplified a plurality of times (for example, 560 times) to be brought within a voltage range suitable for use by the A/D converter 54. As the thermopile signal is bipolar (positive if T_{amb} > T_{thermopile,} negative if less), the thermopile 28 is connected to a reference voltage V_{ref} of about 1.25 V, a voltage step which allows operation with a unipolar amplifier the output V_{A} of which can be defined as V_{ref} + Vₜₕₑᵣₘₒₚᵢₗₑ*560.

To convert the unipolar signal into the correct digital bipolar signal, the A/D converter 54 converts the output voltage of the operational amplifier with respect to the voltage V_{ref} which is automatically subtracted: the absolute value of this voltage is hence not relevant for measurement purposes but only for respecting the dynamic range of the system.

The PTC probe is connected into a bridge approximately balanced at 25°C, the output signal of the bridge being amplified about 10 times by the amplifier 52. The bridge is powered with the same voltage as the thermopile. The output V_{B} of the amplifier 52 of the PTC probe 80 can be defined as V_{ref} + ((V_{ref}*k*T_{PTC}) - 25°C)*0.06.

The reference voltage of the A/D converter 54 is represented by the same voltage V_{ref}: the output of the measurement bridge of the PTC probe is proportional to its feed voltage, as is the digital value at the output of the A/D converter, hence using the same voltage both to power the bridge and to effect the conversion enables this common factor to be eliminated from the relationship between temperatures and digital datum, so eliminating a possible cause of error and drift.

In view of the presence of a fixed reference voltage (V_{ref}) for the entire circuit 38, the same converter 54 is used to measure the battery voltage to define a minimum acceptable operating level of the entire analog part, which in view of the aforestated does not have to use bipolar components with rail-rail operation.

The A/D converter 54 used is for example from 10 to 12 bits, enabling the temperature to be resolved with a resolution of 0.02 or 0.01°C.

Separate measurement of ambient temperature and the thermopile voltage simplifies calibration of the thermometer by separating calibration of the PTC probe 50 from calibration of the thermopile 28.

The use of the PTC probe as the ambient probe also enables the ambient calibration to be made at a single temperature: the relationship between temperature and PTC is known with sufficient accuracy to enable the resistance value to be compensated only at a given temperature, assuming a given function for the other temperatures.

The invention makes it possible to implement a body temperature measurement method which is very accurate and reliable because of the measurement effected at two separate points of the body which originate from two different branches of the aortic arch, the internal and external carotid (forehead and behind the ear), where there is a substantially constant high blood flow. Moreover the measurement is effected in a non-invasive manner, so simplifying it.

The thermometer of the invention used for this temperature measurement is of small dimensions such as to facilitate its easy positioning behind the ear, and as close as possible to it.

## Claims

1. A method for measuring the temperature of the human body by an infrared thermometer (1), this latter having a temperature sensor (27), said method being **characterised by** comprising the following steps: placing said sensor unit (27) on the forehead and moving it therealong, during said movement the forehead temperature being measured; then placing said sensor unit behind the ear in contact with the user, to hence measure the body temperature present thereat; displaying the body temperature only subsequent to these measurements, said temperature being a function of the two measurements effected.

2. A method as claimed in claim 1, **characterised in that** the sensor unit (27) is moved onto the internal and external frontal artery of a patient.

3. A method as claimed ion claim 2, **characterised in that** the sensor unit (27) is moved onto an eyebrow of the patient's eye.

4. A method as claimed in claim 2, **characterised in that** the sensor unit is moved along the patient's forehead as far as the temple.

5. A method as claimed in claim 1, **characterised in that** the following steps are carried out while measuring the temperature in correspondence with the forehead and while measuring the temperature in correspondence with the ear:
i) checking if the measure temperature exceeds a predetermined value,
ii) effecting a plurality of temperature readings within a determined time span and storing them,
iii) eliminating the measurement falsifications from at least part of said measured and stored temperatures, to hence identify a mean temperature value corresponding to that body part, i.e. the forehead or the rear part of the ear, where the temperature has been measured.

6. A method as claimed in claim 5, **characterised by** measuring the mean value of the means of those measured temperatures corresponding to each body part where they have been measured, said mean value defining the body temperature of the patient.

7. A method as claimed in claim 5, **characterised in that** the predetermined temperature value of step i) is close to the human average body temperature.

8. A method as claimed in claim 5, **characterised in that** the time span of step ii) is from 1 to 2 seconds.

9. A method as claimed in claim 5, **characterised in that** the calculation of step iii) considers the ambient temperature which is automatically measured at the commencement of measurement of the body temperature.

10. A method as claimed in claim 1, **characterised in that** the body temperature is stored only after both measurements in correspondence with the patient's forehead and ear have been effected.

11. An infrared thermometer for implementing the method of claim 1, comprising a casing (2) having a plurality of parts (3, 4) connected together, one (4) of these parts containing an infrared sensor unit (27) positioned in correspondence with a window (32) provided within a surface (44) of said part, **characterised in that** said window is provided within a projection (43) on said surface (44) which rises from this latter, the distance between the free surface part (43A) of this projection and the surface (44) from which it rises being less than 1 cm.

12. A thermometer as claimed in claim 11, **characterised in that** the infrared sensor unit (27) comprises a thermopile (28) having a sensor part (30) positioned within a dissipator member (29), said sensor part (30) facing the window of the projection (43) on said part (4) of the casing (2) of the thermometer (1) and being inserted into a recess (31) in said dissipator (29), the useful sensing angle (α) of said sensor part (30) being less than the angle (β) defining the aperture of said window (32).

13. A thermometer as claimed in claim 11, **characterised by** comprising a microprocessor which processes the temperature measurements effected by the infrared sensor unit (27) and activates a display (26) for showing the measured body temperature.

14. A thermometer as claimed in claim 13, **characterised in that** a circuit (38) comprising said microprocessor is fed with a single reference voltage (V_{ref}), the temperature measurements being effected ratiometrically with respect to this reference voltage in order to be independent of the absolute value of this latter.
